# EUROPÄISCHE PATENTANMELDUNG

(11) **EP 3 159 194 A1**
(43) Veröffentlichungstag der Anmeldung: **26.04.2017**
(21) Anmeldenummer: 16194741.1
(22) Anmeldetag: 20.10.2016
(51) Int. Cl.: B60G 9/02

(54) **FAHRZEUG MIT ACHSAUFHÄNGUNG**

(30) Priorität: 22.10.2015 DE 102015220630
(71) Anmelder: Deere & Company, Moline, IL 61265 (US)
(72) Erfinder: Wolf, Günther, 67549 Worms (DE); Von Holst Dr., Christian, 67310 Hettenleidelheim (DE); Kremb, Michael, 67806 Rockenhausen (DE); Hegler, Tobias, 67454 Hassloch (DE); Rössel, Norman, 68167 Mannheim (DE)
(74) Vertreter: Dehnhardt, Florian Christopher

(57) **Zusammenfassung**

Die Erfindung betrifft ein Fahrzeug (10) mit einer Aufhängung für einen pendelnd gelagerten starren Achskörper (12). Die Achsaufhängung weist eine zwischen dem Achskörper (12) und einer Tragstruktur (36) des Fahrzeugs (10) angeordnete und in Höhenrichtung (22) des Fahrzeugs (10) wirksame Aufhängungseinrichtung (20, 26) mit mehreren Kopplungsstellen (28, 44) auf. Die Achsaufhängung weist außerdem einen in Querrichtung (16) des Fahrzeugs (10) verlaufenden Querlenker (24) auf, der mit einem ersten Anlenkbereich (32) an der Tragstruktur (36) angelenkt ist und mit einem zweiten Anlenkbereich (38) über ein Pendellager (40) an dem Achskörper (12) angelenkt ist. Der Querlenker (24) weist einen dritten Anlenkbereich (42) auf, welcher bezüglich des Pendellagers (40) in Querrichtung (16) des Fahrzeugs (10) dem ersten Anlenkbereich (32) gegenüberliegend angeordnet ist und mit einer Kopplungsstelle (28) der Aufhängungseinrichtung (20, 26) gelenkig verbunden ist.

## Beschreibung

Die Erfindung betrifft ein Fahrzeug mit einer Aufhängung für einen pendelnd gelagerten starren Achskörper, wobei diese Achsaufhängung eine zwischen dem Achskörper und einer Tragstruktur des Fahrzeugs angeordnete und in Höhenrichtung des Fahrzeugs wirksame Aufhängungseinrichtung (z.B. mit einem Federelement) aufweist. Außerdem weist die Achsaufhängung einen in Querrichtung des Fahrzeugs verlaufenden Querlenker auf, der an der Tragstruktur und über ein Pendellager an dem Achskörper angelenkt ist.

Landwirtschaftliche Fahrzeuge und industrielle Nutzfahrzeuge, wie beispielsweise Ackerschlepper, weisen häufig einen starren Vorderachskörper auf, der lenkbare Räder trägt. Damit bei Bodenunebenheiten die Räder nicht ihren Bodenkontakt verlieren, ist der Vorderachskörper einer Vorderachse an der Tragstruktur des Fahrzeugs pendelnd gelagert.

DE 196 43 263 A1 offenbart ein landwirtschaftliches Fahrzeug in Form eines Ackerschleppers mit einer pendelnd gelagerten und gefederten Aufhängung des Achskörpers einer Fahrzeugvorderachse. Diese Achsaufhängung weist u.a. einen in Fahrzeugquerrichtung verlaufenden Querlenker und eine vertikal wirkende Federeinrichtung mit zwei Hydraulikzylindern auf.

Der Erfindung liegt die Aufgabe zugrunde, eine kostengünstige Alternative für eine Achsaufhängung vorzuschlagen.

Diese Aufgabe wird gemäß den Merkmalen des Patentanspruchs 1 gelöst. Weitere vorteilhafte Ausgestaltungen und Weiterbildungen der Erfindung gehen aus den Unteransprüchen hervor.

Erfindungsgemäß weist das Fahrzeug (z.B. ein Traktor, Ackerschlepper, oder dergleichen) eine Achsaufhängung für einen pendelnd gelagerten starren Achskörper auf. Der Achskörper ist insbesondere Bestandteil einer Fahrzeugradachse (z.B. Vorder- oder Hinterachse), an der Fahrzeugräder gelagert sind. Zur Realisierung der Achsaufhängung ist zwischen dem Achskörper und einer Tragstruktur (z.B. Fahrgestell, Chassis oder Rahmen) des Fahrzeugs eine Aufhängungseinrichtung angeordnet, welche zumindest mit einer Wirkkomponente in Höhenrichtung des Fahrzeugs wirksam ist. Diese Aufhängungseinrichtung enthält beispielsweise ein Dämpferelement und/oder ein Federelement zur Dämpfung von auf das Fahrzeug einwirkenden vertikalen Kräften. Zu ihrer Kopplung mit der Tragstruktur und dem Achskörper weist die Aufhängungseinrichtung entsprechende Kopplungsstellen auf. Abgesehen von der Aufhängungseinrichtung weist die Achsaufhängung auch einen sogenannten Querlenker (bzw. Querstrebe, insbesondere Panhardstab) auf. Dieser Querlenker verläuft in Querrichtung des Fahrzeugs. Der Querlenker ist mit einem ersten Anlenkbereich an der Tragstruktur angelenkt. Mit einem zweiten Anlenkbereich ist der Querlenker über ein Pendellager an dem Achskörper angelenkt. Auf diese Weise dient der Querlenker einer seitlichen Abstützung des Achskörpers und ermöglicht ein Ausschwingen oder Pendeln des Achskörpers bezüglich des Pendellagers. Mit einem dritten Anlenkbereich ist der Querlenker mit einer Kopplungsstelle der Aufhängungseinrichtung gelenkig verbunden. Dabei ist der Querlenker derart ausgebildet und angeordnet, dass sein dritter Anlenkbereich bezüglich des Pendellagers in Querrichtung des Fahrzeugs dem ersten Anlenkbereich gegenüberliegend angeordnet ist.

Hierdurch wirkt der Querlenker bezüglich des Pendellagers bzw. des zweiten Anlenkbereiches als ein zweiarmiger Hebel. Auf diese Weise kann eine Wirkung der Aufhängungseinrichtung (z.B. Feder- und/oder Dämpfungswirkung in Höhenrichtung) sowohl am dritten Anlenkbereich als auch am ersten Anlenkbereich des Querlenkers eingeleitet werden. Auch wenn die Aufhängungseinrichtung (bezüglich des Pendellagers entlang der Querrichtung des Fahrzeugs) lediglich einseitig vorhanden ist, kann die Wirkung der Aufhängungseinrichtung auch auf der anderen Seite des Pendellagers bereitgestellt werden, während gleichzeitig das Pendeln der Achse über die gelenkige Verbindung zwischen Achskörper und Querlenker am zweiten Anlenkbereich möglich ist. Der Querlenker mit einem dritten Anlenkbereich reduziert folglich die Anzahl der notwendigen Bauteile für eine ausreichende vertikale Aufhängungswirkung. Beispielsweise kann in diesem Fall bei der Federeinrichtung gemäß DE 196 43 263 A1 ein vertikal wirkender Hydraulikzylinder auf einer der beiden Seiten der Tragstruktur (bezüglich des Pendellagers entlang der Fahrzeugquerrichtung gesehen) eingespart werden. Neben einem kostensparenden Aufbau hat diese Achsaufhängung den Vorteil, dass sie mit wenigen Bauteilen sehr raumsparend bereitgestellt wird, wodurch eine größere räumliche Flexibilität für die Montage anderer Bauteile und Komponenten im Bereich zwischen der Tragstruktur und einer Fahrzeugachse entsteht. Auch der Montageaufwand und die Montagekosten sind entsprechend reduziert.

Die gelenkige Verbindung zwischen dem ersten Anlenkbereich des Querlenkers und der Tragstruktur enthält vorzugsweise ein Achsgelenk oder ein Kugelgelenk, um eine günstige mechanische Kopplung innerhalb des Fahrwerks zu erzielen. Die Achse des Achsgelenks ist insbesondere parallel zur Fahrzeuglängsrichtung angeordnet. Das vorgenannte Achsgelenk ist in einer Ausführungsform mit einem Lager aus elastischem Werkstoff ergänzt, um eine kugelgelenkige Verbindung zwischen dem Querlenker und der Tragstruktur bereitzustellen.

Wie bereits erwähnt, weist die Aufhängungseinrichtung mehrere mechanische Kopplungsstellen auf, um zwischen dem Achskörper und der Tragstruktur zu wirken. In einer bevorzugten Ausführungsform ist die Aufhängungseinrichtung mittels einer von dem dritten Anlenkbereich des Querlenkers beabstandeten Kopplungsstelle mit der Tragstruktur gelenkig verbunden, um in Höhenrichtung bzw. vertikaler Richtung eine effiziente Achsaufhängung zu erzielen.

Vorzugsweise enthält die gelenkige Verbindung mindestens einer Kopplungsstelle - insbesondere sämtlicher Kopplungsstellen - der Aufhängungseinrichtung ein Achsgelenk. Auf diese Weise ist die Aufhängungsvorrichtung beispielsweise mit der Tragstruktur und/oder mit dem Querlenker achsgelenkig verbunden. Insbesondere sind die verwendeten Gelenkachsen parallel zueinander angeordnet. Die achsgelenkigen Verbindungen ermöglichen eine effiziente Kopplung zwischen der Aufhängungseinrichtung und der Tragstruktur sowie dem Querlenker auf kostengünstige und montagetechnisch einfache Weise.

In einer weiteren Ausführungsform enthält die vorgenannte gelenkige Verbindung mindestens einer Kopplungsstelle - insbesondere sämtlicher Kopplungsstellen - der Aufhängungseinrichtung ein Kugelgelenk, wodurch auch am Fahrzeug angreifende Kräfte mit von der Höhenrichtung bzw. Vertikalrichtung abweichenden Kraftkomponenten mittels der Aufhängungseinrichtung technisch einfach aufgefangen werden.

Die vorgenannte Wirkung einer kugelgelenkigen Verbindung kann in einer bevorzugten Variante dadurch erreicht werden, dass eine - insbesondere in Fahrzeuglängsrichtung verlaufende - Gelenkachse an der jeweiligen Kopplungsstelle der Aufhängungseinrichtung von einem Lager aus elastischem Werkstoff umgeben ist.

Je nach spezifischer Anforderung an die Achsaufhängung kann die Konstruktion und/oder Positionierung des Querlenkers relativ zur Tragstruktur und dem Achskörper unterschiedlich ausgestaltet sein.

In einer bevorzugten Ausführungsform ist der Querlenker derart konstruiert, dass eine gedachte Verbindungslinie zwischen dem ersten Anlenkbereich und dem zweiten Anlenkbereich etwa parallel zu einer Mittellängsachse des Achskörpers verläuft, wenn sich der Achskörper in einer ungependelten Mittellage befindet. Diese Konstruktion kann beispielsweise raumsparend als längliche strebenartige Form kostengünstig hergestellt werden.

Für eine raumsparende Anordnung des Querlenkers bei gleichzeitig wirksamer Kraftübertragung zwischen dem Querlenker und der Aufhängungseinrichtung ist es vorteilhaft, wenn der Querlenker derart ausgestaltet ist, dass der zweite Anlenkbereich und der dritte Anlenkbereich des Querlenkers oder entsprechende Gelenkachsen in Höhenrichtung des Fahrzeugs versetzt angeordnet sind, wenn sich der Achskörper in einer ungependelten Mittellage befindet. Zwischen dem zweiten und dem dritten Anlenkbereich kann der Querlenker dann beispielsweise durch einen oder mehrere gebogene Strebenabschnitte oder mehrere zueinander abgewinkelte Strebenabschnitte realisiert sein.

Vorzugsweise ist der Querlenker einstückig hergestellt, was dessen mechanische Stabilität im Fahrbetrieb unterstützt. In diesem Fall sind auch sämtliche der vorgenannten Strebenabschnitte einstückiger Bestandteil des Querlenkers.

In einer bevorzugten Ausgestaltung ist der Querlenker derart dimensioniert, dass der dritte Anlenkbereich des Querlenkers oder eine Gelenkachse dieses dritten Anlenkbereiches entlang der Höhenrichtung zumindest auf der Höhe einer Drehachse von an dem Achskörper gelagerten Fahrzeugrädern angeordnet ist. Vorzugsweise ist der dritte Anlenkbereich des Querlenkers oder eine Gelenkachse dieses dritten Anlenkbereiches oberhalb dieser Drehachse angeordnet. Die Gelenkachse ist insbesondere die Drehachse eines Achsgelenkes am dritten Anlenkbereich oder eine gedachte Gelenkachse eines Kugelgelenkes am dritten Anlenkbereich.

Vorteilhaft ist eine Pendelachse des Pendellagers oberhalb einer Drehachse von an dem Achskörper gelagerten Fahrzeugrädern angeordnet, um ein günstiges Pendel- und Schwingungsverhalten des Achskörpers bzw. der die Fahrzeugräder tragenden Starrachse zu erzielen.

In einer bevorzugten Ausführungsform ist eine Pendelachse des Pendellagers in einer quer zur axialen Erstreckung des Achskörpers verlaufenden Achsmittelebene angeordnet. Hierdurch wird eine gleichmäßige Wirkung der Achsaufhängung auf beiden Seiten des Fahrzeugs, d.h. in Querrichtung beiderseits des Pendellagers, unterstützt.

Das Pendellager weist vorzugsweise ein Achsgelenk auf. Dessen Gelenkachse bzw. Pendelachse verläuft insbesondere parallel zur Fahrzeuglängsrichtung.

Wie bereits erwähnt, kann die Aufhängungseinrichtung ein in Höhenrichtung des Fahrzeugs wirksames Dämpferelement und/oder Federelement aufweisen. Während die Aufhängungseinrichtung üblicherweise in Höhenrichtung bzw. Vertikalrichtung des Fahrzeugs wirkende Federeigenschaften aufweist, kann der Einsatz eines Dämpfers wegen seiner schwingungsdämpfenden Eigenschaften die Fahrsicherheit und den Fahrkomfort unterstützen. Eine Feder-Dämpfer-Kombination kann beispielsweise in bewährter raumsparender Ausgestaltung einen Stoßdämpfer und eine ihn umgebende Schraubenfeder enthalten. Alternativ kann für die Aufhängungseinrichtung eine Blattfeder mit oder ohne kombiniertem Dämpferelement vorgesehen sein. In weiteren Ausführungsformen können Luft- oder Gasfedern oder hydropneumatische Federn verwendet werden. Abhängig von der technischen Ausführung kann die Aufhängungseinrichtung entweder passiv arbeiten oder von außen ansteuerbar sein zur Veränderung ihrer Feder- und/oder Dämpfungscharakteristik. Diese Ansteuerung kann durch einen Benutzer erfolgen. Alternativ erfolgt die Ansteuerung automatisch, insbesondere in Abhängigkeit spezifischer Parameter wie Bodenzustand oder Beladungszustand. Eine derartige Ansteuerung ermöglicht die Bereitstellung einer sogenannten aktiven Aufhängung.

Die Aufhängungseinrichtung kann auch von ihrer physikalischen Konstruktion her derart aufgebaut sein, dass sie eine variable Federung und/oder variable Dämpfung aufweist. Auf diese Weise kann die Aufhängungseinrichtung auch ohne eine externe Ansteuerung an unterschiedliche Zustände des Fahrzeugs, wie z.B. unterschiedliche Beladungszustände, angepasst werden.

In einer weiteren bevorzugten Ausführungsform ist die Aufhängungseinrichtung in unterschiedlichen Betriebsmodi derart betreibbar, dass der Abstand zwischen der mit dem Querlenker gelenkig verbundenen Kopplungsstelle und der mit der Tragstruktur gelenkig verbundenen Kopplungsstelle in einem Betriebsmodus unveränderlich einstellbar ist und in einem oder mehreren weiteren Betriebsmodi veränderlich ist. Hierdurch kann die Aufhängungseinrichtung bedarfsweise auch als starre Verbindung zwischen dem Querlenker und der Tragstruktur verwendet werden. Der Achskörper bzw. die entsprechende Fahrzeugachse kann dann als ungefederte, pendelnde Achse betrieben werden.

Vorzugsweise ist der Achskörper Bestandteil einer angetriebenen Vorderachse des Fahrzeugs. Üblicherweise ist die Vorderachse lenkbar ausgebildet.

Vorteilhaft ist ein in Längsrichtung des Fahrzeugs verlaufender Schublenker vorgesehen, der einerseits mit dem Achskörper und andererseits mit der Tragstruktur verbunden ist. Hierdurch kann der Achskörper in Längsrichtung des Fahrzeugs an der Tragstruktur abgestützt werden. So können beispielsweise Brems- und Beschleunigungskräfte wirksam aufgefangen werden.

Der Schublenker kann eine längliche strebenartige oder rohrartige Form aufweisen. Vorzugsweise ist sie derart ausgestaltet, dass sie eine zwischen zwei Fahrzeugachsen angeordnete Gelenkwelle aufnimmt oder zumindest teilweise umgibt. Die ohnehin vorhandene Gelenkwelle kann hierdurch raumsparend angeordnet und gleichzeitig vor unerwünschten äußeren Einflüssen oder Beschädigungen geschützt werden.

Die Verbindung des Schublenkers mit dem Achskörper ist vorzugsweise starr ausgebildet. Zwischen dem Schublenker und der Tragstruktur ist eine Verbindung vorgesehen, welche insbesondere gelenkig ausgebildet ist, z.B. kugelgelenkartig. Die vorgenannte Verbindung zwischen dem Schublenker und der Tragstruktur schließt auch eine Variante ein, bei der der Schublenker mit der Tragstruktur mittelbar verbunden ist, indem der Schublenker mit einer Komponente (z.B. Getriebegehäuse) verbunden ist, welche an der Tragstruktur starr fixiert ist.

Die Erfindung wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: eine schematische Vorderansicht eines landwirtschaftlichen Fahrzeugs mit einer Vorderachsaufhängung,
- Fig. 2: eine schematische Seitenansicht des Fahrzeugs entsprechend Blickrichtung II in Fig. 1, und
- Fig. 3: eine schematische Draufsicht des Fahrzeugs etwa entlang der Schnittlinie III-III in Fig. 2.

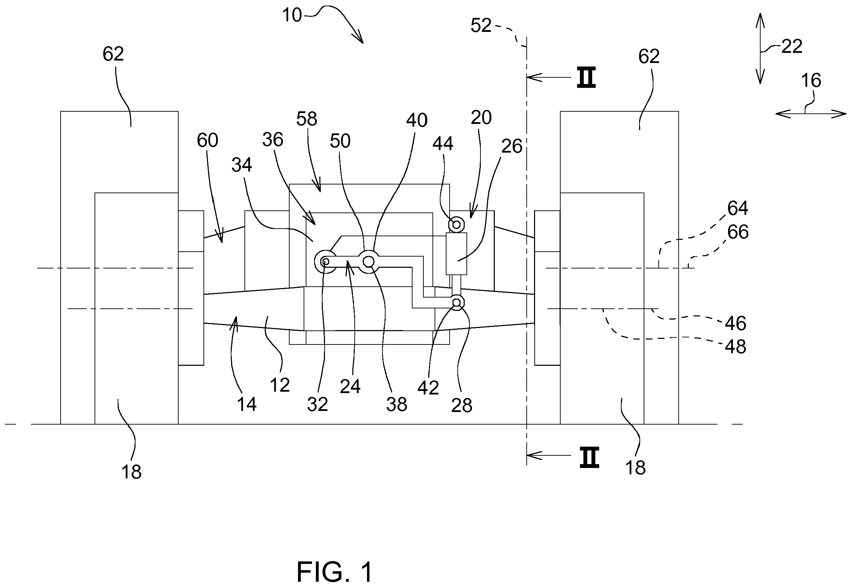

Fig. 1 zeigt schematisch die wesentlichen Teile einer pendelnd gelagerten und gefederten Achsaufhängung eines landwirtschaftlichen Fahrzeugs 10 in Form eines Traktors. Die Achsaufhängung bezieht sich auf einen starren Achskörper 12 einer als Starrachse ausgebildeten Vorderachse 14 des Fahrzeugs 10. An dem Achskörper 12 sind in üblicher Weise zwei in Querrichtung 16 gegenüberliegende Vorderräder 18 gelagert. In einer bevorzugten Ausführung ist in üblicher Weise eine Lenkung der Vorderräder 18 vorgesehen, indem sie z.B. mittels Lenkzylinder und Lenkgestänge relativ zum Achskörper 12 verschwenkt werden.

Die Achsaufhängung weist eine Aufhängungseinrichtung 20 mit Feder- und Dämpfungseigenschaften in Höhenrichtung 22 des Fahrzeugs 10 sowie einen Querlenker 24 auf. Die Aufhängungseinrichtung 20 enthält einen Hydraulikzylinder 26 als Stoßdämpfer, dessen Wirkenden jeweils eine Kopplungsstelle bilden. Der Hydraulikzylinder 26 steht für seine Feder-DämpferFunktion in üblicher Weise mit hier nicht dargestellten Bauteilen wie Hydraulikleitung, Steuerventil und Druckspeicher in Verbindung. Über eine erste Kopplungsstelle 28 ist die Aufhängungseinrichtung 20 bzw. der Hydraulikzylinder 26 mit dem Querlenker 24 gelenkig verbunden.

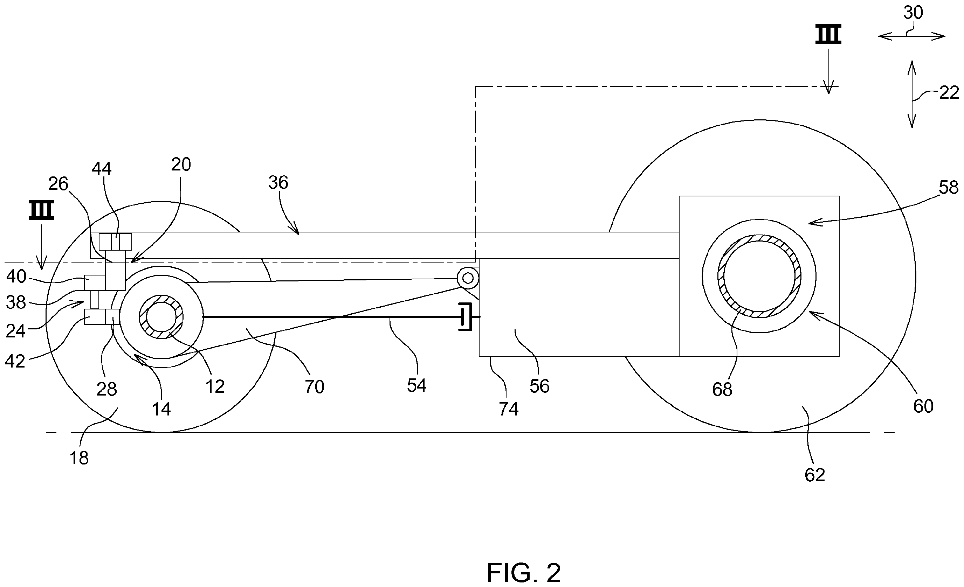

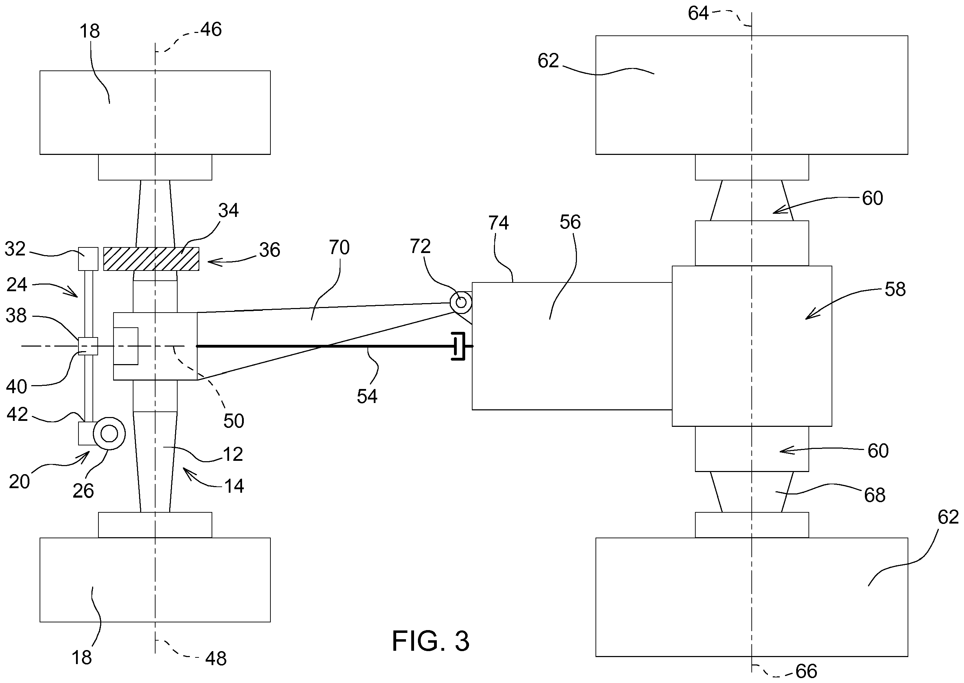

Der Querlenker 24 verläuft in Querrichtung 16. Dies schließt bei spezifischen Ausführungsformen ein, dass der Querlenker 24 sich zusätzlich auch in Höhenrichtung 22 und/oder in einer quer zur Höhenrichtung 22 und Querrichtung 16 verlaufenden Längsrichtung 30 des Fahrzeugs 10 erstrecken kann. Bei der hier dargestellten Ausführungsform erstreckt sich der Querlenker 24 im Wesentlichen in Querrichtung 16 (Fig. 1, Fig. 3) sowie in Höhenrichtung 22 Fig. 1, Fig. 2).

Der Querlenker 24 ist mit einem ersten Anlenkbereich 32 an einem nach unten gerichteten Ausleger 34 einer lediglich schematisch dargestellten Tragstruktur 36 des Fahrzeugs 10 angelenkt. Mit einem zweiten Anlenkbereich 38 ist der Querlenker 24 über ein Pendellager 40 an dem Achskörper 12 angelenkt. Weiterhin weist der Querlenker 12 einen dritten Anlenkbereich 42 auf. Dieser dritte Anlenkbereich 42 ist bezüglich des Pendellagers 40 in Querrichtung 16 dem ersten Anlenkbereich 32 gegenüberliegend angeordnet und mit der ersten Kopplungsstelle 28 der Aufhängungseinrichtung 20 gelenkig verbunden. Der ersten Kopplungsstelle 28 in Höhenrichtung 22 beabstandet ist eine zweite Kopplungsstelle 44 vorhanden, mit der die Aufhängungseinrichtung 20 an der Tragstruktur 36 angelenkt ist.

Die einzelnen gelenkigen Verbindungen an dem ersten Anlenkbereich 32, dem dritten Anlenkbereich 42 und der zweiten Kopplungsstelle 44 weisen vorzugsweise jeweils ein Achsgelenk oder ein Kugelgelenk auf. Im Falle eines Achsgelenkes verläuft dessen Gelenkachse vorzugsweise parallel zur Längsrichtung 30. Eine Pendelachse des Pendellagers 40 ist vorzugsweise ebenfalls parallel zur Längsrichtung 30 angeordnet.

In Fig. 1 ist der Querlenker 24 in seiner neutralen, ungependelten Mittellage dargestellt. In dieser Lage verläuft eine gedachte Verbindungslinie zwischen dem ersten Anlenkbereich 32 und dem zweiten Anlenkbereich 38 des Querlenkers 24 etwa parallel zu einer Mittellängsachse 46 des Achskörpers 12. Außerdem sind der zweite Anlenkbereich 38 und der dritte Anlenkbereich 42 in Höhenrichtung 22 versetzt angeordnet derart, dass der dritte Anlenkbereich 42 niedriger angeordnet ist als der zweite Anlenkbereich 38. Wie in Fig. 1 erkennbar, lässt sich eine derartige Relativanordnung der ersten, zweiten und dritten Anlenkbereiche 32, 38, 42 mittels einer strebenartigen und somit raumsparenden Ausgestaltung des Querlenkers 24 erreichen. Der Höhenversatz einzelner Anlenkbereiche 38, 42 lässt sich einfach durch abgewinkelte Strebenabschnitte des Querlenkers 24 erzielen. Der Querlenker 24 ist vorzugsweise einstückig hergestellt, wobei an seinen Anlenkbereichen 32, 38, 42 Durchgangslöcher, Bohrungen oder dergleichen berücksichtigt sind, um die gelenkigen Verbindungen zu realisieren.

Der dritte Anlenkbereich 42 des Querlenkers 24 oder zumindest eine in Längsrichtung 30 verlaufende, gedachte Gelenkachse des dritten Anlenkbereiches 42 ist etwas oberhalb einer Drehachse 48 der Vorderräder 18 angeordnet. Die Drehachse 48 und die Mittellängsachse 46 fallen bei der Ausführungsform der Vorderachse 12 gemäß Fig. 1 zusammen. Die in Längsrichtung 30 verlaufende Pendelachse 50 des Pendellagers 40 ist ebenfalls oberhalb der Drehachse 48 der Vorderräder 18 angeordnet. Dabei ist die Pendelachse 50 in einer quer zur axialen Erstreckung des Achskörpers 12 verlaufenden Achsmittelebene 52 angeordnet.

Die Achsaufhängung benötigt lediglich einen einzigen Hydraulikzylinder 26 für die gewünschte Feder-Dämpfer-Wirkung an beiden Seiten des Fahrzeugs 10, d.h. entlang der Querrichtung 16 beiderseits der Achsmittelebene 52. Dies wird erreicht durch die Ausgestaltung des Querlenkers 24 mit mindestens drei Anlenkbereichen 32, 38, 42, von denen der Anlenkbereich 42 mit dem Hydraulikzylinder 26 gelenkig verbunden ist. Hierdurch kann der Hydraulikzylinder 26 bezüglich der Achsmittelebene 52 in Querrichtung 16 einseitig angeordnet werden. Über die Hebelkonstruktion des Querlenkers 24 als zweiarmiger Hebel kann die Feder-Dämpfer-Wirkung dann auch auf der anderen Seite des Fahrzeugs 10 bereitgestellt werden, ohne dass dort ein Hydraulikzylinder 26 (oder irgendein anderes Federelement) angeordnet werden muss. Folglich ist diese Achsaufhängung mit wenigen Bauteilen sehr kostengünstig herstellbar und kann am Fahrzeug 10 sehr raumsparend angeordnet werden.

Üblicherweise ist der Hydraulikzylinder 26 als passive Komponente wirksam. Alternativ kann der Hydraulikzylinder 26 auch derart aufgebaut sein, dass er von einem Benutzer oder automatisch von einer Ansteuereinheit ansteuerbar ist, um die Feder-Dämpfer-Eigenschaften zu verändern. In einer weiteren bevorzugten Ausführungsform ist der Hydraulikzylinder 26 derart betreibbar, dass der Abstand zwischen seinen Kopplungsstellen 28, 44 in einem Betriebsmodus unveränderlich eingestellt ist und in einem anderen Betriebsmodus oder mehreren anderen Betriebsmodi wieder veränderlich ist. Bedarfsweise kann der Hydraulikzylinder 26, d.h. bei konstantem Abstand zwischen seinen Kopplungsstellen 28, 44, als starres Verbindungsteil zwischen dem Querlenker 26 und der Tragstruktur 36 wirksam sein. Die Vorderachse 14 kann dann als ungefederte und pendelnde Achse betrieben werden.

Die Vorderachse 14 wird von einem hier nicht dargestellten Vorderradantrieb angetrieben. Dieser Vorderradantrieb wird von einer Antriebswelle 54 bzw. Gelenkwelle angetrieben, welche mit einem Getriebe 56 antriebsmäßig verbunden ist. Das Getriebe 56 ist Bestandteil eines Getriebe-Differenzial-Blockes 58, der im Bereich einer Hinterachse 60 des Fahrzeugs 10 angeordnet und mit der Tragstruktur 36 in geeigneter Weise starr verbunden ist.

An der Hinterachse 60 sind zwei Hinterräder 62 gelagert, deren Drehachse 64 mit einer Mittellängsachse 66 des Achskörpers 68 der Hinterachse 60 zusammenfällt.

Für die Aufhängung ist außerdem ein sogenannter Schublenker 70 vorgesehen. Er ist etwa strebenartig ausgebildet und im Wesentlichen in Längsrichtung 30 ausgerichtet. Er stützt den Achskörper 12 der Vorderachse 14 in Längsrichtung 30 an der Tragstruktur 36 ab. Auf die Vorderachse 14 in Längsrichtung 30 einwirkende Kräfte, z.B. Brems- und Beschleunigungskräfte, können mittels des Schublenkers 70 aufgefangen werden.

Mit seinem einen Längsende ist der Schublenker 70 mit dem Achskörper 12 starr verbunden. Mit seinem in Längsrichtung 30 gegenüberliegenden Längsende ist der Schublenker 70 über ein Kugelgelenk 72 mit einem Gehäuse 74 des Getriebes 56 gelenkig verbunden. Da das Gehäuse 74 mit der Tragstruktur 36 starr verbunden ist, ergibt sich auch eine (mittelbare) kugelgelenkige Verbindung zwischen der Tragstruktur 36 und dem der Tragstruktur 36 zugewandten Längsende des Schublenkers 70. In weiteren Ausführungsformen kann der Schublenker 70 bei einer entsprechenden Montage unmittelbar an der Tragstruktur 36 angelenkt sein. Der Schublenker 70 ist derart ausgestaltet, dass er die Antriebswelle 54 mit radialem Abstand entlang der Längsrichtung 30 zumindest teilweise umgibt.

## Patentansprüche

1. Fahrzeug (10) mit einer Aufhängung für einen pendelnd gelagerten starren Achskörper (12), wobei die Aufhängung eine zwischen dem Achskörper (12) und einer Tragstruktur (36) des Fahrzeugs (10) angeordnete und in Höhenrichtung (22) des Fahrzeugs (10) wirksame Aufhängungseinrichtung (20, 26) mit mehreren Kopplungsstellen (28, 44), und einen in Querrichtung (16) des Fahrzeugs (10) verlaufenden Querlenker (24) aufweist, der mit einem ersten Anlenkbereich (32) an der Tragstruktur (36) angelenkt ist und mit einem zweiten Anlenkbereich (38) über ein Pendellager (40) an dem Achskörper (12) angelenkt ist, **dadurch gekennzeichnet, dass** der Querlenker (24) einen dritten Anlenkbereich (42) aufweist, welcher bezüglich des Pendellagers (40) in Querrichtung (16) des Fahrzeugs (10) dem ersten Anlenkbereich (32) gegenüberliegend angeordnet ist und mit einer Kopplungsstelle (28) der Aufhängungseinrichtung (20, 26) gelenkig verbunden ist.

2. Fahrzeug nach Anspruch 1, **dadurch gekennzeichnet, dass**
die Aufhängungseinrichtung (20, 26) mittels einer von dem dritten Anlenkbereich (42) des Querlenkers (24) beabstandeten Kopplungsstelle (44) mit der Tragstruktur (36) gelenkig verbunden ist.

3. Fahrzeug nach Anspruch 1 oder 2, **dadurch gekennzeichnet, dass** die gelenkige Verbindung mindestens einer Kopplungsstelle (28, 44) der Aufhängungseinrichtung (20, 26) ein Achsgelenk aufweist.

4. Fahrzeug nach einem der vorhergehenden Ansprüche, **dadurch gekennzeichnet, dass** die gelenkige Verbindung mindestens einer Kopplungsstelle (28, 44) der Aufhängungseinrichtung (20, 26) ein Kugelgelenk aufweist.

5. Fahrzeug nach einem der vorhergehenden Ansprüche, **dadurch gekennzeichnet, dass** in einer ungependelten Mittellage des Achskörpers (12) eine Verbindungslinie zwischen dem ersten Anlenkbereich (32) und dem zweiten Anlenkbereich (38) des Querlenkers (24) etwa parallel zu einer Mittellängsachse (46) des Achskörpers (12) verläuft.

6. Fahrzeug nach einem der vorhergehenden Ansprüche, **dadurch gekennzeichnet, dass** in einer ungependelten Mittellage des Achskörpers (12) der zweite Anlenkbereich (38) und der dritte Anlenkbereich (42) des Querlenkers (24) in Höhenrichtung (22) des Fahrzeugs (10) versetzt angeordnet sind.

7. Fahrzeug nach einem der vorhergehenden Ansprüche, **dadurch gekennzeichnet, dass** der dritte Anlenkbereich (42) des Querlenkers (24) oder eine Gelenkachse des dritten Anlenkbereiches (42) oberhalb einer Drehachse (48) von an dem Achskörper (12) gelagerten Fahrzeugrädern (18) angeordnet ist.

8. Fahrzeug nach einem der vorhergehenden Ansprüche, **dadurch gekennzeichnet, dass** eine Pendelachse (50) des Pendellagers (40) oberhalb einer Drehachse (48) von an dem Achskörper (12) gelagerten Fahrzeugrädern (18) angeordnet ist.

9. Fahrzeug nach einem der vorhergehenden Ansprüche, **dadurch gekennzeichnet, dass** eine Pendelachse (50) des Pendellagers (40) in einer quer zur axialen Erstreckung des Achskörpers (12) verlaufenden Achsmittelebene (52) angeordnet ist.

10. Fahrzeug nach einem der vorhergehenden Ansprüche, **dadurch gekennzeichnet, dass** die Aufhängungseinrichtung (20, 26) ein in Höhenrichtung (22) des Fahrzeugs (10) wirksames Dämpferelement (26) aufweist.

11. Fahrzeug nach einem der vorhergehenden Ansprüche, **dadurch gekennzeichnet, dass** die Aufhängungseinrichtung (20, 26) in unterschiedlichen Betriebsmodi betreibbar ist, wobei der Abstand zwischen der mit dem Querlenker (24) gelenkig verbundenen Kopplungsstelle (28) und der mit der Tragstruktur (36) gelenkig verbundenen Kopplungsstelle (44) in einem Betriebsmodus unveränderlich eingestellt ist und in einem anderen Betriebsmodus veränderlich ist.

12. Fahrzeug nach einem der vorhergehenden Ansprüche, **dadurch gekennzeichnet, dass** der Achskörper (12) Bestandteil einer angetriebenen Vorderachse (14) des Fahrzeugs (10) ist.

13. Fahrzeug nach einem der vorhergehenden Ansprüche, **dadurch gekennzeichnet, dass** ein in Längsrichtung (30) des Fahrzeugs (10) verlaufender Schublenker (70) einerseits mit dem Achskörper (12) und andererseits mit der Tragstruktur (36) verbunden ist.
